# EUROPEAN PATENT APPLICATION

(11) **EP 2 139 176 A1**
(43) Date of publication of application: **30.12.2009**
(21) Application number: 08159164.6
(22) Date of filing: 27.06.2008
(51) Int. Cl.: H04L 12/56

(54) **A method for routing a packet between communication endpoints, corresponding devices, and computer program product therefore**

(71) Applicant: Alcatel-Lucent Deutschland AG, 70430 Stuttgart (DE)
(72) Inventor: Klotsche, Ralf, 75305 Neuenbürg (DE)
(74) Representative: Brose, Gerhard

(57) **Abstract**

The invention concerns a method for routing a packet from a communication endpoint to a correspondent communication endpoint via a plurality of communication nodes, the method comprising the step of repeatedly forwarding the packet toward the correspondent communication endpoint until the packet reaches the correspondent communication endpoint, wherein, in order to forward the packet toward the correspondent communication endpoint across a plurality of network domains, the method comprises the steps of creating (101) a data structure for storing destination addresses in the first communication endpoint, adding (102) an address of the correspondent communication endpoint to the data structure in the first communication endpoint, in response to the packet entering a network domain, adding (104) an address of a further communication endpoint of the network domain to the data structure, and in response to the packet reaching the destination address contained in the data structure, removing (105) the destination address contained in the data structure, wherein the repeated forwarding of the packet toward the second communication endpoint is effected by repeatedly forwarding (103) the packet and the data structure toward the destination address contained in the data structure until the packet reaches the correspondent communication endpoint. The invention further concerns a computer program product, a communication endpoint, and a communication node therefore.

## Description

The invention relates to a method for routing a packet from a first communication endpoint to a second communication endpoint via a plurality of communication nodes according to the preamble of claim 1, a computer program product according to the preamble of claim 3, a communication endpoint according to the preamble of claim 5, and a communication node according to the preamble of claim 8.

In telecommunications, information transfer is the process of moving messages containing user information from a source to a sink. Between networked computers, information transfer is commonly effected by establishing a connection via the Transmission Control Protocol (TCP) or simply by sending short messages known as datagrams via the User Datagram Protocol (UDP). Both TCP and UDP are at the core of the Internet protocol suite, i.e. the set of communications protocols that implement the protocol stack on which the Internet and most commercial networks run.

The path along which a data packet travels from source to sink is determined implicitly by the network's routing policies. In the case of the Internet, these policies are largely unknown to end users and can be difficult to control for the network operator. Although there is usually a single active path between a given source and destination, its quality is largely unpredictable due, for instance, to congestion or poor transmission, especially when wireless links are used.

To overcome this downside of the established Internet architecture, it has been suggested to replace the single active path by a universal mesh, sometimes called connectivity cloud, enabling concurrent use of multiple routes between two endpoints. This proposal has been outlined in the course of the project "4WARD - Architecture and design for the future Internet", funded under the Seventh Research Framework Program (FP7) of the European Union, in the project overview available at http://www.4ward-project.eu/index.php?s=overview. The added flexibility of this paradigm allows for an improved load balancing between intermediate network nodes as well as for an increased resilience of the overall information transfer.

Further improvements to the scalability of network infrastructures have been proposed in "Patterns in Network Architecture: A Return to Fundamentals", by John Day.

A remaining downside of the generic path model is the size of the routing information base (RIB), commonly called routing table, to be maintained in each network node for storing the routes and associated metrics to particular network destinations. The need to record routes to large numbers of devices using limited storage space represents a major challenge in routing table construction. An object of the invention is thus to propose a universal network architecture that aims to limit the routing table size.

This object is achieved by a method according to claim 1, a computer program product according to claim 3, an operating system according to claim 4, a communication endpoint according to claim 5, and a communication node according to claim 8.

A main idea of the invention is to introduce into the network architecture an aspect of recursiveness by dividing the overall network into a hierarchy of nested domains. Each domain exposes only those endpoints to other domains which shall be used for transit traffic. The inner structure of the domain remains concealed, enabling the domain operator to freely select among the available protocols and policies independently of any adjacent domains. An additional benefit lies in the added security obtained by this relaying of traffic over dedicated endpoints at the domain borders, effectively preventing attackers from gathering topology data or resolving internal network addresses without intrusion. The intelligence thus gathered is commonly used for denial-of-service attacks in an attempt to make a computer resource within the domain unavailable for its intended users, which can be anticipated by means of an embodiment of the invention.

Further developments of the invention can be gathered from the dependent claims and the following description.

In the following the invention will be explained further making reference to the attached drawing.

To route a packet according to an embodiment of the invention from a first communication endpoint to a second communication endpoint via a plurality of communication nodes, the first communication endpoint creates a data structure for storing destination addresses. The first communication endpoint further adds an address of the second communication endpoint to the data structure. The packet and the stack are repeatedly forwarded toward the destination address at the top of the data structure. In response to the packet entering a network domain, the address of a further communication endpoint of the network domain is added at the appropriate location of the data structure. In response to the packet reaching the destination address at the top of the data structure, this destination address is removed from the top of the data structure.

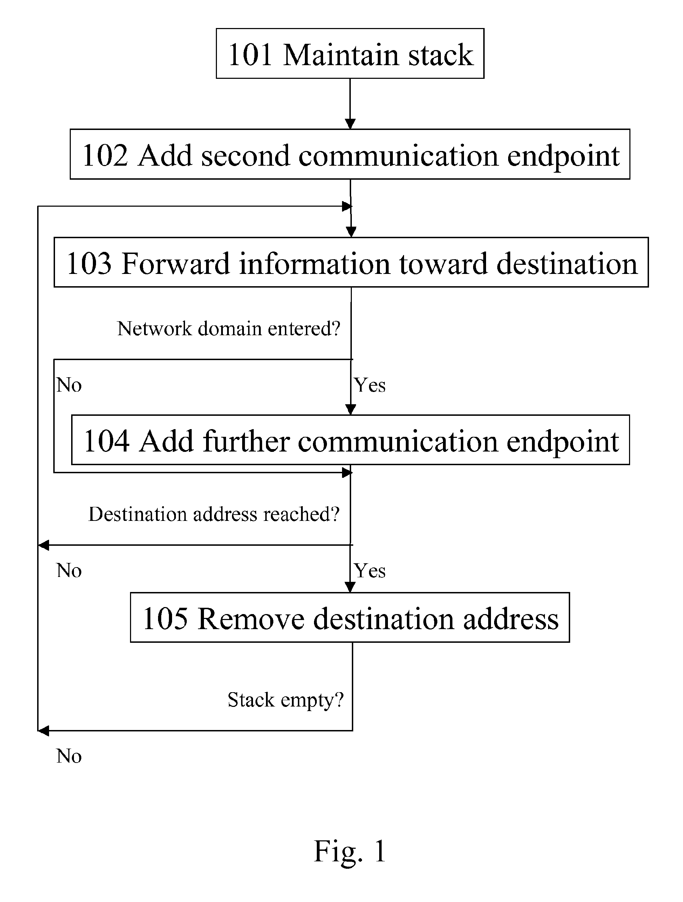

Fig. 1 schematically shows a method for routing a packet from a first communication endpoint to a second communication endpoint via a plurality of communication nodes according to an embodiment of the invention.

In the following, a method according to the invention is elucidated by way of example, referencing Fig. 1.

Fig. 1 shows five consecutive steps 101 through 105. The steps 101 through 105 are sequentially connected by arrows to indicate a preferred sequence of their execution. The third step 103 is only connected to the fourth step 104 if the check "Network domain entered?" yields "Yes"; if the check yields "No", the third step 103 is connected to the fifth step 105. Further, the fourth step 104 is only connected to the fifth step 105 if the check "Destination address reached?" yields "Yes"; if the check yields "No", the fourth step 104 is connected to the third step 103. Finally, if the check "Stack empty?" yields "No", the fifth step 105 is connected to the third step 103.

In the first step 101, to prepare a packet for transfer, a first communication endpoint creates a stack for storing destination addresses. Since the packet originates at the first communication endpoint, the first communication endpoint may be considered the source of the information transfer to be effected. By a stack is meant a data structure based on the principle of "last in first out" (LIFO). The stack of the first step 101 thus is a container of destination addresses that is initially empty. The stack supports the three basic operations of adding a given destination address to the top of the stack leaving previous destination addresses below; removing the destination address currently at the top of the stack; and returning the destination address currently at the top of the stack without removing it from the stack.

In the second step 102, the first communication endpoint adds an address of a second communication endpoint to the stack, the second communication endpoint being the sink of the information transfer. Since the stack was initialized in the first step 101 and no destination address has yet been added, the address of the second communication endpoint is the only destination address on the stack upon completion of the second step 102. Furthermore, since any further destination addresses may only be added to the top of the stack leaving previous destination addresses below, the destination address of the second communication endpoint will remain at the bottom of the stack until it is eventually removed from the stack, leaving behind an empty stack.

In the third step 103, the first communication endpoint forwards the packet toward the destination address at the top of the stack, i.e. toward the address of the second communication endpoint. For this purpose, depending on the underlying network protocol, the first communication endpoint may maintain a routing table comprising a topology of its associated network domain. In this case, to determine where to forward the packet in the third step 103, the first communication endpoint retrieves from the routing table a route to the destination address, extracting at least an address of the next communication node along the route. This is the communication node to which the first communication endpoint forwards the packet by means of a link or communication channel. The link typically takes the form of a point-to-point link, that is, a dedicated link that connects exactly the first communication endpoint and the next communication node. The link may have additional transmission characteristics such as, inter alia, a specific data rate, delay, jitter, packet loss rate, band width, noise ratio, or bit error rate.

To enable the next communication node to further forward the packet toward the destination address, the first communication endpoint forwards the stack along with the packet. In an alternative embodiment, the stack may be transferred independently of the packet or made available to the next communication node by means such as a separate signaling protocol without deviating from the spirit of the invention.

In the fourth step 104, if the packet has entered a network domain by being forwarded to the next communication node, this node will add suitable routing information to the forwarding structure. In the case of the stack, the node will add to the top of the stack an address of a further communication endpoint of that network domain, leaving the address of the second communication endpoint below, or replace a destination address stored by the stack. In computer science, this operation is commonly labeled "pushing" the address of the further communication endpoint onto the stack. The further communication endpoint is typically an endpoint that the network domain has explicitly exposed for transit traffic. Its address thus effectively takes the place of the address of the second communication endpoint until either an even further destination address is added to the stack or the address of the further communication endpoint is eventually removed. Each domain thus maintains its own consistent stack of addresses to route a packet toward its destination.

The third step 103 and the fourth step 104 are reiterated until the packet reaches the destination address at the top of the stack, i.e. the address of the further communication endpoint or an even further destination address added in any subsequent iteration of the fourth step 104. During each iteration, the destination address currently at the top of the stack takes the place of the address of the second communication endpoint.

In the fifth step 105, the packet has reached the destination address at the top of the stack and thus the further communication endpoint last added in the fourth step 104. This endpoint marks the border of the network domain just traversed, forcing the packet to leave that domain. To that effect, the further communication endpoint removes the destination address from the top of the stack. This operation, commonly labeled "pop" in the art, either exposes a previously added destination address or, in case the only destination address was removed, leaves behind an empty stack. In the latter case, the destination address removed is the address of the second communication endpoint that was initially added to the stack in the second step 102. The packet thus having reached its final destination, the method may be considered complete.

If, conversely, the stack is not empty upon completion of the fifth step 105, the packet needs to resume its passage across a parent domain toward the destination address just exposed at the top of the stack. To this effect, the third step 103, the fourth step 104, and the fifth step 105 are reiterated until the stack is eventually emptied. Again, during each iteration, the destination address currently at the top of the stack takes the place of the address of the second communication endpoint, thus causing the packet to traverse any further required network domains on its recursive passage.

To allow for a simplified deployment across a large number of network devices, the embodiment of Fig. 1 takes the form of an operating system component. Alternative embodiments may be configured to be embedded into network hardware or take the form of a device driver or other optional software module.

An example of a network device to which an embodiment of the invention may be applied is a communication endpoint. The endpoint may take the form of, inter alia, a general-purpose computer or a network interface. An endpoint may support further functionality such as capabilities exchange, authentication, binding, and resource reservation.

Another example of a network device to which an embodiment of the invention may be applied is a communication node, that is, a point in the network at which lines intersect or branch. A communication node may take the form of a bridge, switch, router, label switch, or other networked device. A node may support further functionality such as policing, error correction, and tagging at packet ingress, as well as shaping and prioritizing at packet egress. Typically, the node will also maintain a routing table to control the forwarding of packets.

## Claims

1. A method for routing a packet from a communication endpoint to a correspondent communication endpoint via a plurality of communication nodes, the method comprising the repeated step of forwarding the packet toward the correspondent communication endpoint until the packet reaches the correspondent communication endpoint,
**characterized in that,** in order to forward the packet toward the correspondent communication endpoint across a plurality of network domains, the method comprises the steps of
creating (101) a data structure for storing destination addresses in the first communication endpoint,
adding (102) an address of the correspondent communication endpoint to the data structure in the first communication endpoint,
in response to the packet entering a network domain, adding (104) an address of a further communication endpoint of the network domain to the data structure, and
in response to the packet reaching the destination address contained in the data structure, removing (105) the destination address contained in the data structure,
wherein the repeated forwarding of the packet toward the second communication endpoint is effected by repeatedly forwarding (103) the packet and the data structure toward the destination address contained in the data structure until the packet reaches the correspondent communication endpoint.

2. A method according to claim 1, **characterized in that,** in order to forward the packet toward the destination address contained in the data structure, the method further comprises, in a communication node, the steps of
maintaining a routing information base comprising a topology of the network domain,
retrieving from the routing information base a route to the destination address contained in the data structure,
extracting from the route an address of a next communication node along the route, and
forwarding the packet to the next communication node.

3. A computer program product comprising a computer-usable medium including a computer-readable program, wherein the computer-readable program when executed on a computer causes the computer to forward a packet toward a communication endpoint until the packet reaches the communication endpoint,
**characterized in that,** in order to forward the packet toward the communication endpoint across a plurality of network domains, the computer-readable program when executed on the computer further causes the computer to
maintain a data structure (101) for storing destination addresses,
in response to the packet being generated, add (102) an address of the communication endpoint to the data structure,
forward (103) the packet and the data structure toward the destination address contained in the data structure unless the data structure is empty,
in response to the packet entering a network domain, adding (104) an address of a further communication endpoint of the network domain to the data structure,
in response to the packet reaching the destination address contained in the data structure, removing (105) the destination address contained in the data structure.

4. An operating system comprising a computer program product according to claim 3.

5. A communication endpoint configured to be attached to a communication channel, the communication endpoint comprising means for forwarding a packet toward a correspondent communication endpoint,
**characterized in that** the communication endpoint further comprises
means for creating (101) a data structure for storing destination addresses,
means for adding (102) an address of the correspondent communication endpoint to the data structure,
means for forwarding (103) the data structure along with the packet toward the destination address contained in the data structure unless the data structure is empty,
means for adding (104), in response to the packet entering a network domain, an address of a further communication endpoint of the network domain to the data structure, and
means for removing (105), in response to the packet reaching the destination address contained in the data structure, the destination address contained in the data structure.

6. A communication endpoint according to claim 5, **characterized in that** the communication endpoint further comprises at least one of the following:
means for reporting capabilities of the communication endpoint to a further communication endpoint,
means for authenticating to the further communication endpoint,
means for binding to a network address, and
means for reserving resources of the communication endpoint.

7. A network interface controller comprising a communication endpoint according to claim 5.

8. A communication node configured to be embedded in a communication mesh, the communication node comprising means for forwarding a packet toward a communication endpoint,
**characterized in that** the communication node further comprises
means for receiving a packet and a data structure of destination addresses, and
means for forwarding the data structure along with the packet toward the destination address contained in the data structure.

9. A communication node according to claim 8, **characterized in that** the communication node further comprises
means for policing the packets,
means for correcting the packets,
means for tagging the packets,
means for shaping the packets, and
a routing information base.

10. A communication node according to claim 8, **characterized in that** the communication node is configured to serve as at least one of the following:
a network bridge,
a network switch,
a network router,
a label switch,
a gateway.
